# EUROPÄISCHE PATENTSCHRIFT

(11) **EP 2 937 872 B1**
(45) Veröffentlichungstag und Bekanntmachung des Hinweises auf die Patenterteilung: **04.07.2018**
(21) Anmeldenummer: 14305594.5
(22) Anmeldetag: 22.04.2014
(51) Int. Cl.: H01B 7/32, B60M 1/30, H01B 7/22, D07B 1/14

(54) **Kabel für Gleisanlagen**
Cable for railway systems
Câble pour voies ferrées

(43) Veröffentlichungstag der Anmeldung: 28.10.2015
(73) Patentinhaber: Nexans, 92400 Courbevoie (FR)
(72) Erfinder: Büthe, Harald, 41334 Nettetal (DE); Basiry, Smaeil, 41812 Erkelenz (DE)
(74) Vertreter: Feray, Valérie

(56) Entgegenhaltungen:
- EP-A1- 2 650 166
- EP-A2- 2 202 758
- DE-A1-102013 005 901
- FR-A1- 2 980 273
- US-A- 3 789 130

## Beschreibung

Die Erfindung bezieht sich auf ein Kabel für Gleisanlagen von elektrisch betriebenen Schienenfahrzeugen, welches einen Leiter, in dem Kupferdrähte und Stahldrähte enthalten sind, und einen den Leiter umgebenden Mantel aus Isoliermaterial aufweist.

Das im Folgenden für das Leitermaterial beschriebene Kupfer soll auch Kupferlegierungen umfassen.

Derartige Kabel werden beispielsweise als Erdungskabel oder Rückleiter in Gleisanlagen von Schienenfahrzeugen relativ frei zugänglich angeordnet. Rückleiter können beispielsweise in einem mit Betonplatten abgedeckten Kabelschacht parallel neben den Gleisen geführt werden.

Die Betreiber der Gleisanlagen müssen dem vor allem durch den hohen Kupferpreis begünstigten Diebstahl solcher Kabel entgegenwirken. Die Betreiber sind durch den Kabeldiebstahl mit hohen finanziellen Schäden und Sicherheitsrisiken konfrontiert.

Die DE 10 2008 063 086 B4 beschreibt ein Erdungskabel für Eisenbahneinrichtungen, welches einen elektrischen Leiter aus einer Vielzahl von Litzen bildenden Einzeldrähten aufweist. Einige der Einzeldrähte sind als Kombinationsdrähte, welche aus einem verkupferten Kern aus Stahl oder Aluminium bestehen, ausgeführt. Solch ein durch andere Metalle "verunreinigtes" Kabel soll für potentielle Diebe von geringerer Attraktivität als ein reines Kupferkabel sein.

Die FR 2 980 273 A1 offenbart ein Kabel für Gleisanlagen, welches eine Kabelseele aus Kupferdrähten enthält. Das Kabel enthält auch eine Überwachungsader in Form eines Lichtwellenleiters, welche ein Durchtrennen des Kabels detektieren soll.

Gemäß der EP 2 650 166 A1 werden zum Zweck des Diebstahlschutzes um einen aus Kupfer bestehenden Kern eines Leiters sowohl Kupfer- als auch Stahldrähte aufgeseilt. Das Durchtrennen des Kabels soll durch die Stahldrähte erschwert werden.

Der Erfindung liegt die Aufgabe zugrunde, ein Kabel für Gleisanlagen von elektrisch betriebenen Schienenfahrzeugen bereitzustellen, welches so gestaltet ist, daß ein Diebstahl desselben sowohl unattraktiv ist als auch weitgehend erschwert oder verhindert wird.

Diese Aufgabe wird gemäß der Erfindung durch die Merkmale des Anspruchs 1 gelöst. Die mindestens eine in der äußeren Lage des Leiters vorhandene Überwachungsader dient dazu, daß ein Durchtrennen des Kabels durch veränderte Meßwerte der Kenngrößen desselben unmittelbar angezeigt wird. Die Überwachungsader ist an eine Datenerfassungseinheit angeschlossen und wird unabhängig von dem restlichen Leiter elektrisch kontaktiert. Die Überwachungsader ist in der äußeren Lage des Leiters angeordnet, damit sie im Falle eines Diebstahlversuchs sofort zerstört wird. Für sachkundige Diebe, die die Überwachungsader als solche identifizieren und durch Überbrückung deaktivieren möchten, ist dies nur mit großem materiellen und zeitlichen Aufwand möglich, sodaß der Diebstahl des Kabels weniger attraktiv ist und verhindert werden kann. Die äußere Lage des erfindungsgemäßen Kabels weist zusätzlich mindestens ein aus einer Vielzahl von Stahldrähten bestehendes Stahlseil auf. Im Gegensatz zu einem massiven Stahlstrang läßt sich ein Stahlseil mit herkömmlichen Schneidwerkzeugen nicht bzw. nur sehr schwer und zeitraubend durchtrennen. Für das Abschneiden eines solchen Kabels ist selbst mit Spezialwerkzeug ein deutlich erhöhter Zeitaufwand nötig. Nach besonders bevorzugten Ausführungsformen weist die äußere Lage des erfindungsgemäßen Kabels zwei oder drei um deren Umfang verteilte Stahlseile auf.

Durch die Kombination mindestens einer Überwachungsader und mindestens eines nur schwer und langwierig durchtrennbaren Stahlseils in der äußeren Lage des Leiters haben die Betreiber der Gleisanlage oder andere verantwortliche Personen erheblich mehr Zeit, auf anormale Meßwerte zu reagieren und den Diebstahl des erfindungsgemäßen Kabels gegebenenfalls noch rechtzeitig zu unterbinden oder zumindest die Fehlerstelle in Echtzeit zu orten, um das entwendete Kabel schnellstmöglich zu ersetzen. Durch das Stahlseil und die Überwachungsader ist das Leiterkupfer nach dem Entfernen des Mantels nicht ohne weiteres zugänglich. Der Diebstahl eines solchen Kabels wird deshalb wesentlich erschwert bzw. verhindert. Auch ist der Aufwand zum Entwenden des Kupfers besonders hoch. Durch die Zusatzarbeit und die Präsenz eines anderen Metalls bzw. einer Überwachungsader ist der Verwertungsertrag eines Kupfer-Stahl-Mischleiters gegenüber einem reinen Kupferleiter drastisch reduziert. Dadurch verliert der Diebstahl eines solchen Kabels an Attraktivität.

Nach einer weiteren bevorzugten Ausführungsform hat der Leiter des erfindungsgemäßen Kabels einen aus einem Stahlseil bestehenden Kern. Dieses Stahlseil trägt ebenfalls besonders wirkungsvoll zum Diebstahlschutz bei, indem es das Durchtrennen des Kabels zusätzlich noch weiter erschwert.

Mit besonderem Vorteil weist die äußere Lage des Leiters zwei oder drei Überwachungsadern auf, von denen nicht alle in Betrieb sind. Durch die Verwendung von zwei oder drei Überwachungsadern ist sichergestellt, daß ein potentieller Dieb nicht weiß, welche der Überwachungsadern tatsächlich in Betrieb ist bzw. sind. Die somit nötige Überbrückung jeder einzelnen Überwachungsader bedeutet wiederum einen größeren materiellen und zeitlichen Aufwand, sodaß der Diebstahl des Kabels auch deshalb weniger attraktiv ist.

Das erfindungsgemäße Kabel bietet deshalb sowohl einen aktiven als auch einen passiven Diebstahlschutz. Gegenüber einem reinen Kupferkabel bietet das erfindungsgemäße Kabel außerdem eine gute Bieg- und Formbarkeit.

Ausführungsbeispiele des Erfindungsgegenstandes sind in den Zeichnungen dargestellt. Es zeigen:
Fig. 1 einen Querschnitt eines Kabels nach einem ersten Ausführungsbeispiel der Erfindung, und
Fig. 2 einen Querschnitt eines Kabels nach einem zweiten Ausführungsbeispiel der Erfindung.

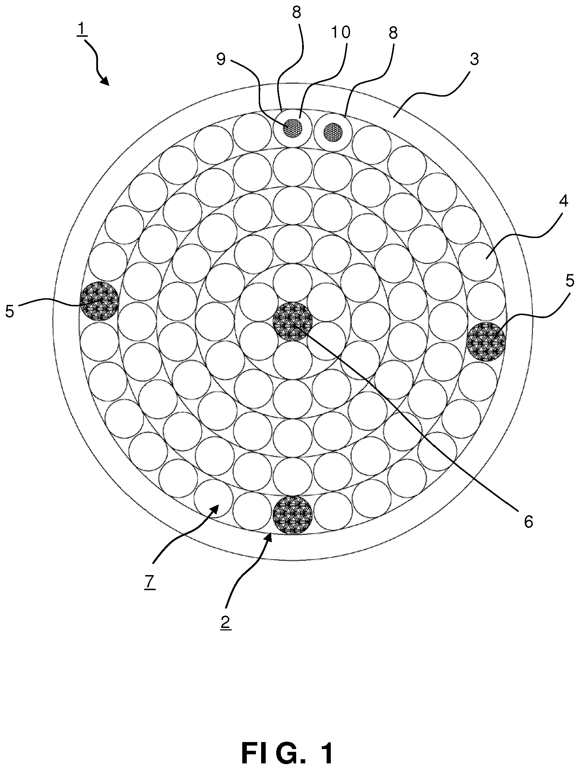

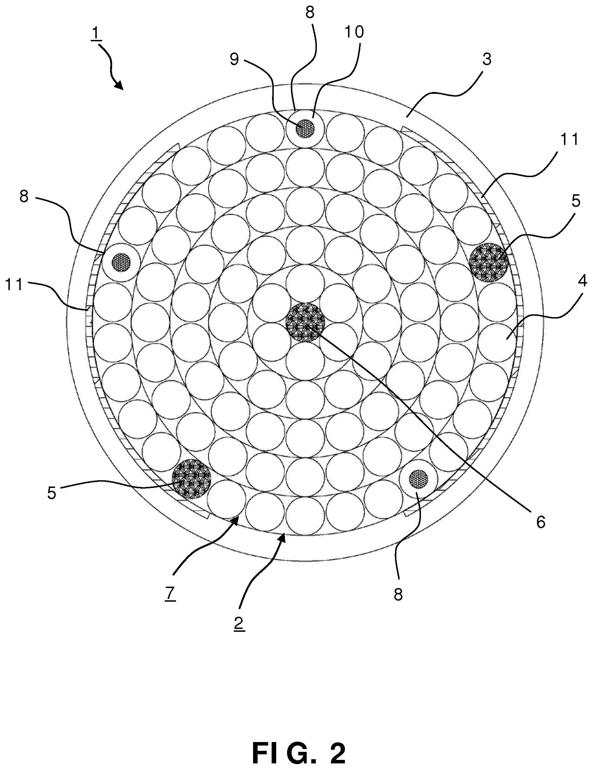

In den Fig. 1 und 2 sind Kupferdrähte 4 jeweils als einfache Kreise und Stahlseile 5 jeweils als mit einer Kreuzschraffur versehene Kreise dargestellt.

Das erfindungsgemäße Kabel 1 nach einer ersten Ausführungsform ist in Fig. 1 im Querschnitt schematisch dargestellt. Das Kabel 1 besteht aus einem elektrischen Leiter 2 und einem Mantel 3 aus Isoliermaterial. Der Leiter 2 enthält sowohl Kupferdrähte 4 als auch Stahldrähte. Die Stahldrähte sind zu mehreren Stahlseilen 5 verseilt. Eines der Stahlseile 5 bildet den Kern 6 des Leiters 2. Um den Kern 6 herum ist eine Vielzahl von Kupferdrähten 4 aufgeseilt. Die äußere Lage 7 des Leiters 2 besteht aus drei weiteren Stahlseilen 5, aus Kupferdrähten 4 und aus zwei Überwachungsadern 8. Die Elemente der äußeren Lage 7 des Leiters 2 sind auf die den Kern 6 umgebenden Kupferdrähte 4 aufgeseilt. Diese äußere Lage 7 kann als Bewehrungslage des Kabels 1 bezeichnet werden. Die äußeren Stahlseile sind, wie dargestellt, vorzugsweise gleichmäßig um den Umfang der äußeren Lage 7 verteilt. Die Durchmesser der Kupferdrähte 4 und der Stahlseile 5 müssen nicht, wie in Fig. 1 dargestellt, identisch sein.

Die Stahlseile 5 bestehen jeweils aus einer Vielzahl von Stahldrähten. Die Stahldrähte sind vorzugsweise verzinkt, um einen Korrosionsschutz zu gewährleisten. Ein Stahlseil 5, bestehend aus einzelnen Stahldrähten, hat den Vorteil, daß es sich nur sehr viel schwerer und zeitaufwendiger mit den üblichen Schneidwerkzeugen durchtrennen läßt als ein massiver Stahlstrang. Der Diebstahl des Kabels 1 wird deshalb erheblich erschwert. Durch eine geeignete, gleichmäßige Anordnung der mindestens drei äußeren Stahlseile muß in jedem Fall mindestens eines der Seile durchtrennt werden, um an die Kupferdrähte zu gelangen.

Die zwei Überwachungsadern 8 bestehen mit Vorteil aus einzelnen isolierten Kupferdrähten 9. In der bevorzugten Ausführungsform hat ein Kupferdraht 9 einer Überwachungsader 8 eine Querschnittsfläche von 1,5 mm² und ist von einer Isolierung 10 aus PVC umgeben. Der Gesamtdurchmesser einer Überwachungsader 8 beträgt beispielsweise 3 mm. Die zwei Überwachungsadern 8 der ersten Ausführungsform liegen beispielsweise direkt nebeneinander innerhalb der äußeren Lage 7 des Leiters 2, wie in Fig. 1 dargestellt.

Die Überwachungsadern 8 erlauben die Messung bzw. Überwachung des Widerstands, des Isolationswiderstands oder der Kapazität des Kabels 1. Dadurch ist sichergestellt, daß das Durchtrennen der äußeren Lage 7 des Leiters 2 im Falle eines Diebstahls sofort festgestellt werden kann. Mit besonderem Vorteil wird für die Messung von einer der genannten Größen nur eine der zwei Überwachungsadern 8 eingesetzt, sodaß ein Dieb, der die Überwachungsadern 8 gegebenenfalls als solche erkennt, nicht weiß, welche der beiden Adern 8 tatsächlich in Betrieb ist.

Es können mit Vorteil auch mehr als zwei Überwachungsadern 8 vorhanden sein. In diesem Fall können gleichzeitig zwei oder drei der oben genannten Kenngrößen des Kabels 1 gemessen bzw. überwacht werden. In Fig. 2 ist der Querschnitt eines Kabels 1 nach einer zweiten Ausführungsform gezeigt, welche sich von der ersten Ausführungsform durch die Anzahl der Stahlseile 5 und der Überwachungsadern 8 in der äußeren Lage 7 des Leiters 2 unterscheidet. In dem Beispiel von Fig. 2 sind drei Überwachungsadern 8 gleichmäßig in der äußeren Lage 7 des Leiters 2 verteilt angeordnet. In dieser Ausführungsform werden beispielsweise zwei Kenngrößen des Kabels 1 mittels jeweils einer Überwachungsader 8 überwacht, während die dritte Überwachungsader 8 nicht in Betrieb ist. Die äußere Lage 7 des Leiters 2 enthält außerdem zwei Stahlseile 5. Ein weiteres Stahlseil 5 bildet den Kern 6 des Leiters 2. Um den Kern 6 herum ist eine Vielzahl von Kupferdrähten 4 aufgeseilt.

In jeder der gezeigten Ausführungsformen des erfindungsgemäßen Kabels 1 ist der Zugang zu dem Kupferanteil des Leiters durch die Bewehrungslage 7 besonders erschwert.

Mit besonderem Vorteil handelt es sich bei dem erfindungsgemäßen Kabel 1, nach jeder der dargestellten Ausführungsformen von Fig. 1 und 2, um einen Rückleiter für Gleisanlagen, d.h. um ein Starkstromkabel zur Rückführung des Rückstroms zur Stromquelle in einer Bahnanlage. Ein Stahlseil 5 besteht beispielsweise aus jeweils 49 Stahldrähten mit einem Durchmesser von je 0,3 mm. Der Durchmesser des Leiters 2 mit Überwachungsadern 8 und Stahlseilen 5 beträgt beispielweise 29,7 mm. Mit diesen beispielhaften Zahlenwerten erfüllt der spezifische Gleichstromwiderstand des Kabels 1 in beiden gezeigten Ausführungsformen die Anforderungen eines reinen Kupferleiters mit einer Querschnittsfläche von 500 mm². Das erfindungsgemäße Kabel 1 entspricht in diesen Beispielen deshalb einem äquivalenten Standard-Kupferkabel N-YY-O 500 RMV der Norm VDE 0295 bzw. EN 60228, Leiterklasse 2. Ein solches Kabel 1 ist zudem kompatibel zu dem Durchmesser der Kabelschuhe und anderer Standardkomponenten für die Montage des genannten Standardkabels.

Um die mechanische Widerstandskraft des erfindungsgemäßen Kabels 1 noch weiter zu erhöhen, kann über der äußeren Lage 7 des Leiters 2 ein Stahlband 11 aufgewickelt sein, wie in Fig. 2 dargestellt. Das Stahlband 11 kann beispielsweise offen wendelförmig gewickelt sein, um die Flexibilität des Kabels 1 nicht zu beeinträchtigen. Die Wickel- bzw. Verseilrichtung des Stahlbands 11 ist vorzugsweise entgegengesetzt zur Verseilrichtung der Elemente der äußeren Lage 7 des Leiters 2.

Die Kupferdrähte 4 des Leiters 2 sind mit Vorteil verdichtet. Dadurch werden die Zwischenräume zwischen den Drähten verringert, sodaß die Stabilität des Leiters 2 insgesamt erhöht wird. Ein solch verdichteter Leiter läßt sich insbesondere besser in Kabelschuhe oder andere Verbinder crimpen.

Der Mantel 3 des Kabels 1 besteht vorzugsweise aus Polyethylen (PE) oder Polyurethan (PUR). Er hat eine Dicke zwischen 2 und 3 mm, beispielsweise 2,2 mm. Zwischen der äußeren Lage 7 des Leiters 2 und dem Mantel 3 kann zusätzlich eine aus Isoliermaterial bestehende Bewicklung (nicht dargestellt) angeordnet sein, beispielsweise ein Kunststoffband aus PUR. Um die mechanische Festigkeit des Mantels 3 zu erhöhen, kann in einer äußeren Schicht des Mantels 3 ein Flechtgewebe (nicht dargestellt) aus Stahldraht oder Glasfaser eingearbeitet sein. Dadurch wird das Abziehen oder Aufschlitzen des Kabelmantels 3 deutlich erschwert und der Diebstahlschutz für die Kupferdrähte 4 entsprechend erhöht.

Das erfindungsgemäße Kabel 1 wird mit Vorteil mit einer den Aufbau und den Verwendungszweck des Kabels 1 wiedergebenden Kabelbeschriftung bedruckt. Für das in Verbindung mit Fig. 1 beispielhaft beschriebene Bahnrückstromkabel mit einem Kupfer-Stahl-Mischleiter und zwei Überwachungskabeln mit den genannten Querschnittsflächen sowie einem halogenfreien PUR-Mantel kann die Beschriftung folgende Form haben: A-2YQ 500 RMV St/Cu + 2x1,5 RE ÜA. Weiterhin kann der Mantel beispielsweise schwarz sein und zwei um etwa 180° versetzte blaue Streifen aufweisen. Durch diese Kennzeichnungen, aus denen deutlich hervorgeht, daß es sich nicht um ein reines Kupferkabel handelt und das Kabel zudem überwacht wird, können sachkundige Diebe wirkungsvoll von ihrem Vorhaben abgehalten werden.

## Patentansprüche

1. Kabel (1) für Gleisanlagen von elektrisch betriebenen Schienenfahrzeugen, welches einen Leiter (2), in dem Kupferdrähte (4) und Stahldrähte enthalten sind, und einen den Leiter (2) umgebenden Mantel (3) aus Isoliermaterial aufweist, **dadurch gekennzeichnet, daß** der Leiter (2) eine äußere Lage (7) aus aufgeseilten Elementen hat, welche mindestens ein aus einer Vielzahl von Stahldrähten bestehendes Stahlseil (5), Kupferdrähte (4) und mindestens eine Überwachungsader (8) aufweist.

2. Kabel (1) nach Anspruch 1, **dadurch gekennzeichnet, daß** der Leiter (2) einen aus einem Stahlseil (5) bestehenden Kern (6) hat.

3. Kabel (1) nach einem der vorangehenden Ansprüche, **dadurch gekennzeichnet, daß** die äußere Lage (7) des Leiters (2) mindestens zwei Überwachungsadern (8) aufweist, von denen nicht alle eine in Betrieb sind.

4. Kabel nach einem der vorangehenden Ansprüche, **dadurch gekennzeichnet, daß** die mindestens eine Überwachungsader (8) aus einem isolierten Kupferdraht (9) besteht.

5. Kabel (1) nach einem der vorangehenden Ansprüche, **dadurch gekennzeichnet, daß** die mindestens eine Überwachungsader (8) zur Messung von mindestens einer der Größen Widerstand, Isolationswiderstand und Kapazität geeignet ist.

6. Kabel (1) nach einem der vorangehenden Ansprüche, **dadurch gekennzeichnet, daß** das mindestens eine Stahlseil (5) aus verzinkten Stahllitzen besteht.

7. Kabel (1) nach einem der vorangehenden Ansprüche, **dadurch gekennzeichnet, daß** um den Leiter (2) zusätzlich mindestens ein Stahlband (11) herumgewickelt ist.

8. Kabel (1) nach Anspruch 7, **dadurch gekennzeichnet, daß** das Stahlband (11) mit zur Verseilrichtung der Kupferdrähte (4) entgegengesetzter Verseilrichtung auf den Leiter (2) aufgebracht ist.

9. Kabel (1) nach einem der vorangehenden Ansprüche, **dadurch gekennzeichnet, daß** der Mantel (3) ein Flechtgewebe aus Stahl oder aus Glasfasern enthält.

10. Kabel (1) nach einem der vorangehenden Ansprüche, **dadurch gekennzeichnet, daß** die Kupferdrähte (4) des Leiters (2) verdichtet sind.

11. Kabel (1) nach einem der vorangehenden Ansprüche, **dadurch gekennzeichnet, daß** das Isoliermaterial des Mantels (3) Polyethylen oder Polyurethan aufweist.

## Claims

1. A cable (1) for railway systems of electrically operated railway vehicles, which has a jacket (3) surrounding the conductor (2) made from insulation material, in which copper wires (4) and steel wires are contained, **characterized in that** the conductor (2) has an outer layer (7) made from stranded together elements, which has at least a steel cord (5) consisting of a plurality of steel wires, copper wires (4) and at least one monitoring wire (8).

2. A cable (1) according to Claim 1, **characterized in that** the conductor (2) has a core (6) consisting of a steel cord (5).

3. A cable (1) according to any one of the preceding claims, **characterized in that** the outer layer (7) of the conductor (2) has at least two monitoring wires (8), not all of which are in operation.

4. A cable (1) according to any one of the preceding claims, **characterized in that** the at least one monitoring wire (8) consists of an insulated copper wire (9).

5. A cable (1) according to any one of the preceding claims, **characterized in that** the at least one monitoring wire (8) is suitable for measuring at least one of the parameters resistance, insulation resistance and capacity.

6. A cable (1) according to any one of the preceding claims, **characterized in that** the at least one steel cord (5) consists of zinc-coated steel strands.

7. A cable (1) according to any one of the preceding claims, **characterized in that** in addition at least one steel band (11) is wound around the conductor (2).

8. A cable (1) according to Claim 7, **characterized in that** the steel band (11) is applied to the conductor (2) with stranding direction opposite to the stranding direction of the copper wires (4).

9. A cable (1) according to any one of the preceding claims, **characterized in that** the jacket (3) contains a braided fabric made from steel or from glass fibers.

10. A cable (1) according to any one of the preceding claims, **characterized in that** the copper wires (4) of the conductor (2) are compacted.

11. A cable (1) according to any one of the preceding claims, **characterized in that** the insulation material of the jacket (3) has polyethylene or polyurethane.

## Revendications

1. Câble (1) pour voies ferrées de véhicules ferroviaires électriques, qui comprend un conducteur (2), dans lequel sont contenus des fils de cuivre (4) et des fils d'acier, et une enveloppe (3) entourant le conducteur (2), en matériau isolant, **caractérisé en ce que** le conducteur (2) comprend une couche externe (7) en éléments câblés, qui comprend au moins un câble d'acier (5) constitué d'une pluralité de fils d'acier, des fils de cuivre (4) et au moins un fil de surveillance (8).

2. Câble (1) selon la revendication 1, **caractérisé en ce que** le conducteur (2) comprend une âme (6) constituée d'un câble d'acier (5).

3. Câble (1) selon l'une des revendications précédentes, **caractérisé en ce que** la couche externe (7) du conducteur (2) comprend au moins deux fils de surveillance (8) dont pas tous sont en service.

4. Câble (1) selon l'une des revendications précédentes, **caractérisé en ce que** l'au moins un fil de surveillance (8) est constitué d'un fil de cuivre isolé (9).

5. Câble (1) selon l'une des revendications précédentes, **caractérisé en ce que** l'au moins un fil de surveillance (8) est conçu pour la mesure d'au moins une des grandeurs : résistance, résistance d'isolation et capacité.

6. Câble (1) selon l'une des revendications précédentes, **caractérisé en ce que** l'au moins un câble d'acier (5) est constitué de torons d'acier zingués.

7. Câble (1) selon l'une des revendications précédentes, **caractérisé en ce que**, autour du conducteur (2) est entourée en outre au moins une bande d'acier (11).

8. Câble (1) selon la revendication 7, **caractérisé en ce que** la bande d'acier (11) est appliquée sur le conducteur (2) avec un sens de câblage opposé au sens de câblage des fils de cuivre (4).

9. Câble (1) selon l'une des revendications précédentes, **caractérisé en ce que** l'enveloppe (3) contient un tressage en acier ou en fibres de verre.

10. Câble (1) selon l'une des revendications précédentes, **caractérisé en ce que** les fils de cuivre (4) du conducteur (2) sont compactés.

11. Câble (1) selon l'une des revendications précédentes, **caractérisé en ce que** le matériau isolant de l'enveloppe (3) comprend du polyéthylène ou du polyuréthane.
